# EUROPEAN PATENT SPECIFICATION

(11) **EP 3 708 816 B1**
(45) Date of publication and mention of the grant of the patent: **07.12.2022**
(21) Application number: 20162948.2
(22) Date of filing: 13.03.2020
(51) Int. Cl.: F02D 41/00, F02D 41/06, F02D 41/10, F02D 41/12, B60W 20/19, B60W 30/18, F02N 11/04, F01N 5/04, F02B 37/10, F02B 39/10, F02D 13/04, B60W 10/08, B60W 10/06, B60K 6/485

(54) **METHOD AND DEVICE FOR IMPROVING AN ENGINE BRAKE PROCEDURE**
VERFAHREN UND VORRICHTUNG ZUR VERBESSERUNG EINES MOTORBREMSVORGANGS
PROCÉDÉ ET DISPOSITIF POUR AMÉLIORER UNE PROCÉDURE DE FREINAGE DE MOTEUR

(30) Priority: 15.03.2019 IT 201900003815
(43) Date of publication of application: 16.09.2020
(73) Proprietor: FPT Motorenforschung AG, 9320 Arbon (CH)
(72) Inventor: ZIEGLER, Christian, 9230 FLAWIL (CH); COCOCCETTA, Fabio, 8006 ZURICH (CH)
(74) Representative: Lovino, Paolo

(56) References cited:
- EP-A1- 0 420 705
- EP-A1- 2 634 405
- EP-A1- 2 886 824
- EP-A2- 0 233 079
- US-A1- 2010 107 632
- US-B2- 9 341 145

## Description

### Cross-Reference to related applications

This patent application claims priority from Italian patent application no. 102019000003815 filed on 15/03/2019.

### Field of the invention

The present invention relates to a method and device for improving an engine brake procedure.

### Description of the prior art

An engine brake procedure aims to use the engine to brake the vehicle. Such kind of procedure is widely adopted in the field of commercial and heavy-duty vehicles.

For example, EP28868241A1 and US9341145B2 disclose turbo-compound schemes for industrial vehicles.

The engine brake procedure consists in cutting off the fuel injection and to suddenly open the exhaust valve(s) when the piston (s) is close to the TDC (top dead center). Thus, the air is released in the exhaust manifold before giving back the energy content stored as compression energy.

The downsizing of the internal combustion engines reduces the engine brake capability.

Those commercial vehicles intended to be implemented in the public transportation, cannot be equipped with downsized internal combustion engines, due to the low torque developed at low engine speed. Indeed, such vehicles are subjected to frequent stops and restarts, thus 90% of their operation is at low engine speed. Smaller displacement engines develop less torque in comparison with large displacement engines. Thus, downsizing seems to be in contrast with such specific implementation.

In the last year, fully electric vehicles have been experimented for public transportation; however, such vehicles are subjected to strong limitations in terms of maximum mileage and maximum speed. Thus, the paths should be selected to permit battery charge or replacement and to avoid high vehicle speeds.

A compromise is offered by the hybrid vehicles, nevertheless, the main engine, namely the internal combustion engine, develops at least 200 kW (e.g industrial engines), thus the electric drive should develop at least 50 kW (a quarter of the main engine power) to effectively supplement the internal combustion engine during the frequent starts.

The battery pack should be able to supply the electric drive with 50 kW, however high power batteries are expensive, thus, 50 kW are achieved by implementing several parallels of batteries strings supplying low currents. This solution leads to a high numbers of cheap batteries, which develop a relevant weight and reduce the available space onboard.

In addition, the implementation of hybrid propulsion is almost invasive.

BRM Boost recuperation machines, also called BRS boost recuperation system (as called by Bosch Inc), are known in the field of private automotive. According to BRM concept an electrical machine is capable to crank the internal combustion engine (e.g. in some environmental conditions), to charge the battery during regenerative braking thanks to energy recuperation, and helps combustion engine during vehicle acceleration, and could potentially restart the engine as a conventional engine starter, and, while coasting or driving downhill, the BRM / high-power battery enable switching off the internal combustion engine by driving all the relevant consumers, while the vehicle coasts in zero-emission, noiseless, low resistance mode, driven solely by its momentum.

A BRM system typically includes the electric motor, a DC/DC converter and a high-power battery.

The power usually available are about 10 - 15 kW. Thus, such powers are unsuitable for the implementation in commercial and industrial vehicles.

### Summary of the invention

The main object of the present invention is to propose a propulsion layout capable to improve the engine brake capability even in those cases in which engine is downsized and implemented in those application, such as public transportation, leading the engine to work at low speed.

For low speed it is meant a speed well below the maximum torque speed.

The main concept of the present invention is the implementation of an e-turbocharger paired with a BRM machine.

An e-turbocharger includes a compressor operatively arranged on the inlet line of the internal combustion engine and a turbine operatively arranged on the exhaust line of the same internal combustion engine.

The compressor and the turbine are fixedly connected with the opposite ends of the rotor of one single electric motor-generator. Thus, the opposite ends of the rotor are connected, in one end, with the compressor and, in the opposite end, with the turbine.

The turbine is preferably a VGT (variable geometry turbine), namely capable to control its efflux section and thus to control the energy acquired by the exhaust gasses. During engine brake the e-turbocharger is controlled to boost the engine, namely to increase the pressure at the intake manifold of the internal combustion engine.

This behavior leads to increase the mass of air introduced in the cylinders and thus the energy dissipated by the engine in its compression.

At the same time, the BRM is controlled as generator to produce the maximum electric energy, thus its maximum braking force with the internal combustion engine. Although the BRM develops a low power in comparison with the main engine, the e-turbocharger on the market are usually equipped with electric drive developing less rated power than the BRM, thus, a part of the energy generated by the BRM can be stored in a battery pack.

Thus, according to the present invention it is possible to guarantee an efficient engine brake operation even in presence of a BRM developing less the 1/5 of the rated power of the main engine.

These and further objects are achieved by means of the attached dependent claims, which describe preferred embodiments of the invention, forming an integral part of the present description.

### Brief description of the drawings

The invention will become fully clear from the following detailed description, given by way of a mere exemplifying and non-limiting example, to be read with reference to the attached drawing figures, wherein:

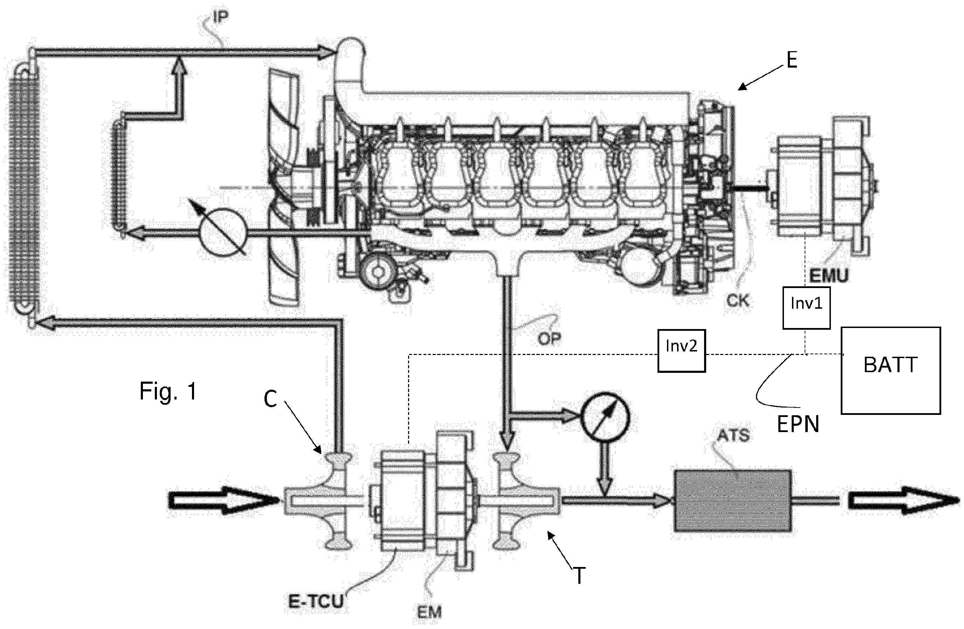

- Fig. 1 shows a possible layout of the present invention.

The same reference numerals and letters in the figures designate the same or functionally equivalent parts. According to the present invention, the term "second element" does not imply the presence of a "first element", first, second, etc.. are used only for improving the clarity of the description and they should not be interpreted in a limiting way.

### Detailed description of the preferred embodiments

Example embodiments are, now, provided so that this disclosure will be thorough, for those skilled in the art.

Figures 1 disclose an internal combustion engine E, preferably a diesel engine.

The engine E has an inlet line IP and an outlet line OP, such as the engine sucks fresh air from the environment through the inlet line and deliver exhaust gas in the environment through the outlet (or exhaust) line OP.

Along the outlet line, one or more abatement devices are arranged and grouped schematically into the after treatment system block labelled as ATS.

For example, for a diesel engine ATS can include a DOC (Diesel Oxidation Catalyst) and a DPF (Diesel Particulate Filter), a SCR (Selective Catalytic Reduction) and a dosing module arranged immediately upstream of the SCR to introduce a urea-based reducing agent, usually called with its commercial name AdBlue.

According to the present invention, an electric turbocharger E-TCU includes a turbine T operatively arranged on the outlet line such that to produce mechanical and electric energy from enthalpy content of the exhaust gas. Indeed, the turbine is connected to a compressor C through the rotor of an electric motor-generator EM, in a way per se known.

The compressor C is arranged on the inlet line EP of the internal combustion engine E and the electric motor-generator EM has opposite ends of its rotor stably connected on one side with turbine and on the other opposite side with the compressor.

The turbine has preferably a variable geometry, or is a fixed geometry coupled with a bypass BP pipe suitable to bypass the turbine T, and on said bypass is arranged a controllable wastegate valve WG in order to adjust the amount of exhaust gas crossing the turbine T.

According to figure 1, the turbine T is arranged upstream of the ATS.

A BRM, labelled as EMU, is mechanically connected with the combustion engine crankshaft CK. The BRM is capable to supplement the internal combustion engine, working as a drive or to generate electric energy, working as a generator.

The scheme includes an electric power network EPN. The EMU is electrically connected with the electric power network EPN through a first inverter Inv1. The latter is configured to control the operation of the EMU in order to work as drive or generator.

The electric motor-generator EM of the E-TCU is connected to the same electric power network EPN, too, through a second inverter Inv2. The second inverter, analogously to the first one, is configured to control the operation of the electric motor-generator EM.

A battery pack BATT is connected to the electric power network EPN to store and deliver electric energy from/over the electric power network.

Preferably, the same control unit ECU (not shown) arranged to control the internal combustion engine is configured to supervise and control the first and second inverters operation, such that their behavior is coordinated as described here below.

When the engine is turned into brake mode, the fuel injection is cut off, and the exhaust valve operation is modified in order to suddenly release the trapped air from the cylinders when the piston is close to the TDC.

At the same time, the E-TCU is controlled to increase the boost, preferably at its maximum capability, and thus increasing the amount of air pumped in the engine cylinders.

At the same time, the EMU is controlled to apply the maximum possible braking torque to the combustion engine. According to a first operating condition, during engine braking, the corresponding electric energy produced by the EMU is partly stored in the battery pack BATT and partly consumed directly by the E-TCU to boost the internal combustion engine.

In case the braking force has to be metered, this metering effect is operated by controlling the E-TCU boost and leaving the EMU developing its maximum braking torque.

This strategy permits to accumulate electric energy useful for other operating conditions, especially to restart the vehicle after a stop following the engine brake operation. According to a second operating condition, during engine braking the EMU and the E-TCU are interconnected such that all the energy generated by the EMU is integrally consumed by the E-TCU, forming an isolated circuit with respect to the remaining on-board electric circuit.

In other words, the EMU and E-TCU are interconnected between each another, but disconnected by the remaining onboard electric circuit and cooperate together to the engine brake procedure, while the onboard loads are supplied by the battery pack BATT previously charged by the EMU. This solution appears particularly advantageous because it permits to preserve battery from strong charging stress.

The second operating condition is switched on when the maximum braking torque is required, while the first braking torque is operated in all other situations.

It is clear that each of the above first and second motor-generator can have its own inverter, however, the presence of an inverter to manage the operation of the corresponding electric motor-generator does not imply that the first and second motor-generators are connected to the onboard electric network.

In addition for "onboard electric network" is meant an high power electric energy network, that should not be confused with a data network usually implemented to the control of actuators and the exchange the messages and signals interrelated with the control of the same actuators, including the above motor-generators.

Preferably, the turbine or the waste-gate is controlled to reduce the backpressure on the exhaust line, in order to permit a complete evacuation of the trapped air when the exhaust valve suddenly opens.

According to a another aspect of the present invention, after the vehicle stop, when the vehicle start to move, the E-TCU is controlled to boost the internal combustion engine, while the EMU is controlled to supplement the internal combustion engine with the residual available electric energy. In other words, according to the battery capacity, the E-TCU takes precedence with respect to the EMU, because the torque increase delivered to the vehicle driveline caused by the E-TCU is sensitively higher than the torque increase caused by the EMU.

Indeed 15 kW in comparison with at least 200 kW developed by the main engine are rather negligible.

In case the battery pack is not capable to supply the E-TCU, the EMU is controlled to generate electric energy in order to supplement the battery pack.

According to this condition, this operation appear to be in strong contrast with the known operation of the BRM.

Even if the E-TCU is faster than common turbocharger, its effectiveness can be improved by increasing the boost before the driver pushed the accelerator pedal. For example, when the driver releases the braking pedal, the E-TCU is immediately controlled to increase the boost. Thus, the, downsized, internal combustion engine behaves as a large displacement internal combustion engine.

ADAS "Advanced driver-assistance systems" can be implemented in order to obtain a "just in time" "anticipation" of the E-TCU, without wasting precious electric energy. Indeed, an excessive early activation of the E-TCU could lead to early consumption of stored electric energy.

According to the present invention, it is possible to implement downsized internal combustion engines in commercial and industrial vehicles, even if the downsized internal combustion engines are unable, per se, to develop
- relevant engine brake torque and
- relevant positive torque at low engine speed;
without implementing powerful electric motors and corresponding storage batteries.

The present invention finds optimal application where the battery pack has a reduced power capacity and the BRM or alternative motor installations develops a power less than 1/5 of the power developed by the main engine (internal combustion engine).

For "alternative motor installations" means those installation in which an electric motor/generator is connected or connectable with a combustion engine crankshaft.

Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well known processes, well-known device structures are disclosed.

This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

Many changes, modifications, variations and other uses and applications of the subject invention will become apparent to those skilled in the art after considering the specification and the accompanying drawings which disclose preferred embodiments thereof as described in the appended claims.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. Method for improving an engine brake procedure, in particular for a combustion engine installed in a commercial or industrial vehicle, the method including the preliminary steps of
- providing the internal combustion engine (E) of a turbocharger (E-TCU) equipped with a first electric motor-generator (EM) operatively coupled with the turbocharger, such that a compressor (C) of the turbocharger is arranged to supercharge the internal combustion engine and a turbine (T) of the turbocharger is arranged on an engine exhaust line (EP) to extract mechanical energy from the exhaust gases produced by the internal combustion engine,
- equipping the internal combustion engine (E) with a second motor-generator (EMU) operatively coupled with a crankshaft (CK) of the internal combustion engine;
the method including the following steps when an engine brake operation is active:
- controlling said first electric motor-generator (EM) to increase the boost produced by said compressor, and
- controlling said second motor-generator (EMU) to apply its maximum possible braking torque to the combustion engine,
wherein, according to a first operating condition, said first and second motor-generators are interconnected between each other and with an electric energy storage (BATT) and wherein an overall braking torque is metered by regulating said boost through said first electric motor-generator only, while said second motor-generator (EMU) is controlled to develop its maximum braking torque, such that a residual electric energy not consumed by the first motor-generator is stored in said electric energy storage.

2. Method according to claim 1, wherein, according to a second operating condition, said first and second motor-generators are interconnected between each other and isolated from any other electric network during engine brake operation, and are connected to an electric network during any other different operating conditions, wherein an electric energy storage (BATT) is connected to the electric network.

3. Method according to claim 2, wherein said first and second operating conditions are selected according to a target engine torque.

4. Method according to any one of the preceding claims, wherein said turbine has a variable and controllable geometry and/or the turbine is provided with a waste-gate valve (WG) and wherein said turbine and/or said waste-gate valve are controlled to reduce a backpressure over said exhaust line (EP) during engine brake operation.

5. Method according to claim 1, wherein, during engine brake operation, a residual energy not consumed by said first electric motor-generator (EM) is stored in said electric energy storage.

6. Method according to any one of the previous claims, wherein, when said engine brake procedure lead to a vehicle stop, a further vehicle start operation is operated by first boosting the compressor through the first electric motor-generator and then accelerating the internal combustion engine.

7. Method according to claim 6, wherein said boost operation is coordinated by means of an ADAS system in order to minimize an anticipation of the boosting with respect to the combustion engine acceleration.

8. Method according to any one of previous claims, wherein, after said engine brake operation, the method including the following steps executed when the commercial or industrial vehicle is going to start or to accelerate at low speed:
- checking an available electric energy stored in said electric energy storage,
- controlling said first electric motor-generator (EM) in order to speed up the compressor and, as a consequence, to boost the internal combustion engine and if a residual energy is available from the electric energy storage then
- controlling said second electric motor-generator (EMU) to supplement said internal combustion engine (E), otherwise if residual energy is not available,
- leaving said second electric motor-generator (EMU) disabled, and if said available electric energy stored in the electric energy storage is insufficient to supply said first electric motor-generator (EM), then
- controlling said second electric motor-generator (EMU) to supplement said electric energy storage (BATT) in supplying said first electric motor-generator.

9. Commercial or industrial vehicle equipped with
- an internal combustion engine (E) equipped with
+ an electric turbocharger (E-TCU) having a first electric motor-generator (EM) operatively coupled with a turbocharger, such that a relative compressor (C) of the turbocharger is arranged to supercharge the internal combustion engine and a relative turbine (T) of the turbocharger is arranged on an engine exhaust line (EP) to extract mechanical energy from the exhaust gasses produced by the internal combustion engine,
+ a second motor-generator (EMU) operatively coupled with a crankshaft (CK) of the internal combustion engine;
- an electric power network (EPN) suitable to operatively interconnect said first and second electric motor-generator and a battery pack (BATT) suitable to receive and supply electric energy from/over the electric power network;
- a control unit arranged to carry out the following steps when an engine brake operation is active:
- controlling said first electric motor-generator (EM) to increase the boost produced by said compressor, and
- controlling said second motor-generator (EMU) to apply its maximum possible braking torque to the combustion engine, such that a corresponding electric energy produced is at least partly consumed directly by the first electric motor-generator,
wherein, according to a first operating condition, said first and second motor-generators are interconnected between each other and with an electric energy storage (BATT) and wherein an overall braking torque is metered by regulating said boost through said first electric motor-generator only, while said second motor-generator (EMU) is controlled to develop its maximum braking torque, such that a residual electric energy not consumed by the first motor-generator is stored in said electric energy storage.

## Patentansprüche

1. Verfahren zum Verbessern einer Motorbremsprozedur insbesondere für eine Brennkraftmaschine, die in einem kommerziellen oder industriellen Fahrzeug installiert ist, wobei das Verfahren die folgenden vorausgehenden Schritte umfasst:
- Versehen der Brennkraftmaschine (E) mit einem Turbolader (E-TCU), der mit einem ersten Elektromotorgenerator (EM), der an den Turbolader funktionstechnisch gekoppelt ist, ausgestattet ist, derart, dass ein Kompressor (C) des Turboladers ausgelegt ist, die Brennkraftmaschine aufzuladen, und eine Turbine (T) des Turboladers an einer Kraftmaschinenabgasleitung (EP) angeordnet ist, um mechanische Energie aus den Abgasen, die durch die Brennkraftmaschine erzeugt werden, zu entnehmen, und
- Ausstatten der Brennkraftmaschine (E) mit einem zweiten Motorgenerator (EMU), der funktionstechnisch an eine Kurbelwelle (CK) der Brennkraftmaschine gekoppelt ist; wobei
das Verfahren dann, wenn eine Motorbremsoperation aktiv ist, die folgenden Schritte umfasst:
- Steuern des ersten Elektromotorgenerators (EM), die Verstärkung, die durch den Kompressor erzeugt wird, zu erhöhen, und
- Steuern des zweiten Motorgenerators (EMU), sein maximal mögliches Bremsmoment auf die Brennkraftmaschine auszuüben, wobei
der erste und der zweite Motorgenerator gemäß einer ersten Betriebsbedingung miteinander und mit einem Speicher (BATT) für elektrische Energie verbunden sind und ein Gesamtbremsmoment durch Regulieren lediglich der Verstärkung durch den ersten Elektromotorgenerator dosiert wird, während der zweite Motorgenerator (EMU) gesteuert wird, sein maximales Bremsmoment zu entwickeln, derart, dass eine elektrische Restenergie, die durch den ersten Motorgenerator nicht verbraucht wird, im Speicher für elektrische Energie gespeichert wird.

2. Verfahren nach Anspruch 1, wobei der erste und der zweite Motorgenerator gemäß einer zweiten Betriebsbedingung miteinander verbunden und während einer Motorbremsoperation von jedem weiteren elektrischen Netz isoliert sind und während sämtlichen weiteren verschiedenen Betriebsbedingungen mit einem elektrischen Netz verbunden sind, wobei ein Speicher (BATT) für elektrische Energie mit dem elektrischen Netz verbunden ist.

3. Verfahren nach Anspruch 2, wobei die erste und die zweite Betriebsbedingung gemäß einem Sollkraftmaschinendrehmoment gewählt werden.

4. Verfahren nach einem der vorhergehenden Ansprüche, wobei die Turbine eine veränderbare und steuerbare Geometrie besitzt und/oder die Turbine mit einem Ladedruckregulierungsventilventil (WG) versehen ist und die Turbine und/oder das Ladedruckregulierungsventilventil gesteuert werden, einen Gegendruck über die Auslassleitung (EP) während einer Motorbremsoperation zu verringern.

5. Verfahren nach Anspruch 1, wobei während einer Motorbremsoperation eine Restenergie, die durch den ersten Elektromotorgenerator (EM) nicht verbraucht wird, im Speicher für elektrische Energie gespeichert wird.

6. Verfahren nach einem der vorhergehenden Ansprüche, wobei dann, wenn die Motorbremsprozedur zu einem Fahrzeugstopp führt, eine weitere Fahrzeugstartoperation durch zunächst Verstärken des Kompressors durch den ersten Elektromotorgenerator und dann Beschleunigen der Brennkraftmaschine bewirkt wird.

7. Verfahren nach Anspruch 6, wobei die Verstärkungsoperation mittels eines ADAS-Systems koordiniert wird, um eine Vorausschätzung der Verstärkung in Bezug auf die Brennkraftmaschinenbeschleunigung zu minimieren.

8. Verfahren nach einem der vorhergehenden Ansprüche, wobei nach der Motorbremsoperation das Verfahren, das die folgenden Schritte umfasst, ausgeführt wird, wenn das kommerzielle oder industrielle Fahrzeug bei niedriger Geschwindigkeit starten oder beschleunigen wird:
- Prüfen einer verfügbaren elektrischen Energie, die im Speicher für elektrische Energie gespeichert ist,
- Steuern des ersten Elektromotorgenerators (EM), den Kompressor zu beschleunigen und somit die Brennkraftmaschine zu verstärken, und dann, wenn eine Restenergie aus dem Speicher für elektrische Energie verfügbar ist,
- Steuern des zweiten Elektromotorgenerators (EMU), die Brennkraftmaschine (E) zu ergänzen, und andernfalls, wenn keine Restenergie verfügbar ist,
- Belassen des zweiten Elektromotorgenerators (EMU) im deaktivierten Zustand und dann, wenn die verfügbare elektrische Energie, die im Speicher für elektrische Energie gespeichert ist, unzureichend ist, um den ersten Elektromotorgenerator (EM) zu versorgen,
- Steuern des zweiten Elektromotorgenerators (EMU), den Speicher (BATT) für elektrische Energie beim Versorgen des ersten Elektromotorgenerators zu ergänzen.

9. Kommerzielles oder industrielles Fahrzeug, das mit Folgendem ausgestattet ist:
- einer Brennkraftmaschine (E), die mit Folgendem ausgestattet ist:
+ einem elektrischen Turbolader (E-TCU), der einen ersten Elektromotorgenerator (EM) aufweist, der funktionstechnisch an einen Turbolader gekoppelt ist, derart, dass ein jeweiliger Kompressor (C) des Turboladers ausgelegt ist, die Brennkraftmaschine aufzuladen, und eine jeweilige Turbine (T) des Turboladers an einer Kraftmaschinenabgasleitung (EP) angeordnet ist, um mechanische Energie aus den Abgasen, die durch die Brennkraftmaschine erzeugt werden, zu entnehmen, und
+ einem zweiten Motorgenerator (EMU), der an eine Kurbelwelle (CK) der Brennkraftmaschine funktionstechnisch gekoppelt ist;
- einem elektrischen Leistungsnetz (EPN), das geeignet ist, den ersten und den zweiten Elektromotorgenerator und eine Batteriebaugruppe (BATT) geeignet funktionstechnisch zu verbinden, um elektrische Energie von/über das elektrische Leistungsnetz zu empfangen und zu liefern; und
- einer Steuereinheit, die ausgelegt ist, die folgenden Schritte auszuführen, wenn eine Motorbremsoperation aktiv ist:
- Steuern des ersten Elektromotorgenerators (EM), die Verstärkung, die durch den Kompressor erzeugt wird, zu erhöhen, und
- Steuern des zweiten Motorgenerators (EMU), sein maximal mögliches Bremsmoment auf die Brennkraftmaschine auszuüben, derart, dass eine entsprechende elektrische Energie, die erzeugt wird, mindestens teilweise durch den ersten Elektromotorgenerator direkt verbraucht wird, wobei
der erste und der zweite Motorgenerator gemäß einer ersten Betriebsbedingung miteinander und mit einem Speicher (BATT) für elektrische Energie verbunden sind und ein Gesamtbremsmoment durch Regulieren lediglich der Verstärkung durch den ersten Elektromotorgenerator dosiert wird, während der zweite Motorgenerator (EMU) gesteuert wird, sein maximales Bremsmoment zu entwickeln, derart, dass eine elektrische Restenergie, die durch den ersten Motorgenerator nicht verbraucht wird, im Speicher für elektrische Energie gespeichert wird.

## Revendications

1. Procédé d'amélioration d'une procédure de freinage de moteur, en particulier pour un moteur à combustion installé dans un véhicule commercial ou industriel, le procédé comportant les étapes préliminaires consistant à
- fournir le moteur à combustion interne (E) d'un turbocompresseur (E-TCU) équipé d'un premier moteur-générateur électrique (EM) fonctionnellement couplé au turbocompresseur, de telle sorte qu'un compresseur (C) du turbocompresseur est conçu pour suralimenter le moteur à combustion interne et une turbine (T) du turbocompresseur est agencée sur une conduite d'échappement de moteur (EP) pour extraire l'énergie mécanique des gaz d'échappement produits par le moteur à combustion interne,
- équiper le moteur à combustion interne (E) d'un second moteur-générateur (EMU) fonctionnellement couplé à un vilebrequin (CK) du moteur à combustion interne ;
le procédé comportant les étapes suivantes lorsqu'une opération de freinage de moteur est active :
- la commande dudit premier moteur-générateur électrique (EM) pour augmenter l'amplification produite par ledit compresseur, et
- la commande dudit second moteur-générateur (EMU) pour appliquer son couple de freinage possible maximum au moteur à combustion,
dans lequel, selon un premier état de fonctionnement, lesdits premier et second moteurs-générateurs sont reliés entre eux et à un dispositif de stockage d'énergie électrique (BATT) et dans lequel un couple de freinage global est mesuré en régulant ladite amplification par le biais dudit premier moteur-générateur électrique uniquement, alors que ledit second moteur générateur (EMU) est commandé pour développer son couple de freinage maximum, de telle sorte qu'une énergie électrique résiduelle non consommée par le premier moteur-générateur est stockée dans ledit dispositif de stockage d'énergie électrique.

2. Procédé selon la revendication 1, dans lequel, selon un second état de fonctionnement, lesdits premier et second moteurs-générateurs sont reliés entre eux et isolés de tout autre réseau électrique durant l'opération de freinage de moteur, et sont reliés à un réseau électrique durant tout autre état de fonctionnement différent, dans lequel un dispositif de stockage d'énergie électrique (BATT) est relié au réseau électrique.

3. Procédé selon la revendication 2, dans lequel lesdits premier et second états de fonctionnement sont sélectionnés selon un couple de moteur cible.

4. Procédé selon l'une quelconque des revendications précédentes, dans lequel ladite turbine présente une géométrie variable et pouvant être commandée et/ou la turbine est pourvue d'une soupape de décharge (WG) et dans lequel ladite turbine et/ou ladite soupape de décharge sont commandées pour réduire une contrepression sur ladite conduite d'échappement (EP) durant une opération de freinage de moteur.

5. Procédé selon la revendication 1, dans lequel, durant une opération de freinage de moteur, une énergie résiduelle non consommée par ledit premier moteur-générateur électrique (EM) est stockée dans ledit dispositif de stockage d'énergie électrique.

6. Procédé selon l'une quelconque des revendications précédentes, dans lequel, lorsque ladite procédure de freinage de moteur conduit à un arrêt de véhicule, une autre opération de démarrage de véhicule est réalisée en amplifiant d'abord le compresseur par le biais du premier moteur-générateur électrique puis en accélérant le moteur à combustion interne.

7. Procédé selon la revendication 6, dans lequel ladite opération d'amplification est coordonnée au moyen d'un système ADAS afin de réduire au minimum une anticipation de l'amplification par rapport à l'accélération de moteur à combustion.

8. Procédé selon l'une quelconque des revendications précédentes, dans lequel, après ladite opération de freinage de moteur, le procédé comprend les étapes suivantes exécutées lorsque le véhicule commercial ou industriel va démarrer ou accélérer à faible vitesse :
- la vérification d'une énergie électrique disponible stockée dans ledit dispositif de stockage d'énergie électrique,
- la commande dudit premier moteur-générateur électrique (EM) afin d'accélérer le compresseur et, en conséquence, d'amplifier le moteur à combustion interne et si une énergie résiduelle est disponible depuis le dispositif de stockage d'énergie électrique alors
- la commande dudit second moteur-générateur électrique(EMU) afin de compléter ledit moteur à combustion interne (E), sinon si de l'énergie résiduelle n'est pas disponible,
- le fait de laisser ledit second moteur-générateur électrique(EMU) désactivé, et si ladite énergie électrique disponible stockée dans le dispositif de stockage d'énergie électrique est insuffisante pour alimenter ledit premier moteur-générateur électrique(EM), alors
- la commande dudit second moteur-générateur électrique(EMU) pour compléter ledit dispositif de stockage d'énergie électrique (BATT) dans l'alimentation dudit premier moteur-générateur électrique.

9. Véhicule commercial ou industriel équipé
- d'un moteur à combustion interne (E) équipé
+ d'un turbocompresseur électrique (E-TCU) possédant un premier moteur-générateur électrique (EM) fonctionnellement couplé à un turbocompresseur, de telle sorte qu'un compresseur (C) relatif du turbocompresseur est conçu pour suralimenter le moteur à combustion interne et une turbine (T) relative du turbocompresseur est agencée sur une conduite d'échappement de moteur (EP) pour extraire l'énergie mécanique des gaz d'échappement produits par le moteur à combustion interne,
+ d'un second moteur-générateur (EMU) fonctionnellement couplé à un vilebrequin (CK) du moteur à combustion interne ;
- d'un réseau d'alimentation électrique (EPN) approprié pour relier fonctionnellement lesdits premier et second moteurs-générateurs et un bloc-batterie (BATT) approprié pour recevoir et apporter de l'énergie électrique depuis/sur le réseau d'alimentation électrique ;
- d'une unité de commande conçue pour réaliser les étapes suivantes lorsqu'une opération de freinage de moteur est active :
- la commande dudit premier moteur-générateur électrique (EM) pour augmenter l'amplification produite par ledit compresseur, et
- la commande dudit second moteur-générateur (EMU) pour appliquer son couple de freinage possible maximum au moteur à combustion, de telle sorte qu'une énergie électrique correspondante produite est au moins partiellement consommée directement par le premier moteur-générateur électrique,
dans lequel, selon un premier état de fonctionnement, lesdits premier et second moteurs-générateurs sont reliés entre eux et à un dispositif de stockage d'énergie électrique (BATT) et dans lequel un couple de freinage global est mesuré en régulant ladite amplification par le biais dudit premier moteur-générateur électrique uniquement, alors que ledit second moteur générateur (EMU) est commandé pour développer son couple de freinage maximum, de telle sorte qu'une énergie électrique résiduelle non consommée par le premier moteur-générateur est stockée dans ledit dispositif de stockage d'énergie électrique.
